# EUROPEAN PATENT APPLICATION

(11) **EP 3 955 428 A1**
(43) Date of publication of application: **16.02.2022**
(21) Application number: 20191055.1
(22) Date of filing: 14.08.2020
(51) Int. Cl.: H02K 1/27, H02K 7/18

(54) **MAGNET ASSEMBLY COMPRISING A FOCUSED MAGNETIC FLUX PORTION AND A PARALLEL MAGNETIC FLUX PORTION**

(71) Applicant: Siemens Gamesa Renewable Energy A/S, 7330 Brande (DK)
(72) Inventor: Azar, Ziad, Sheffield, South Yorkshire S10 4ED (GB); Clark, Richard, Worrall Sheffield, S35 0AF (GB); Duke, Alexander, Sheffield, S10 5SN (GB); Thougaard, Hans-Joergen, 8600 Silkeborg (DK); Urda, Adriana Cristina, 2300 Copenhagen (DK)
(74) Representative: Aspacher, Karl-Georg

(57) **Abstract**

It is described a magnet assembly (200) comprising i) a focused magnetic flux portion (210) having a first angular distribution (212) of magnetization directions resulting in a focused magnetization, and ii) a parallel magnetic flux portion (220) having a second angular distribution (222) of magnetization directions resulting in a parallel magnetization. It is further described a rotor arrangement (150) with such a magnet assembly (200), an electromechanical transducer (140) with such a rotor arrangement (150), and a wind turbine (100) with such an electromechanical transducer (140).

## Description

### Field of invention

The present invention relates to the technical field of permanent magnets for electromechanical transducers. The present invention relates in particular to a magnet assembly. The present invention further relates to a rotor arrangement for an electromechanical transducer, which rotor arrangement comprises the magnet assembly. Furthermore, the present invention relates to an electromechanical transducer comprising such a rotor arrangement and to a wind turbine comprising such an electromechanical transducer.

### Art Background

Permanent magnetic materials are used in a plurality of different fields of application. Probably the technically and economically most important field of applications are electromechanical transducers, i.e. electric motors and electric generators. An electric motor being equipped with at least one permanent magnet converts electric energy into mechanical energy by producing a temporary varying magnetic field by means of windings or coils. This temporary varying magnetic field interacts with the magnetic field of the PM resulting e.g. in a rotational movement of a rotor arrangement with respect to a stator arrangement of the electric motor. In a physically complementary manner, an electric generator, also called a dynamo electrical machine, converts mechanical energy into electric energy.

An electric generator is a core component of any power plant for generating electric energy. This holds true for power plants which directly capture mechanical energy, e.g. hydroelectric power installations, tidal power installations, and wind power installations also denominated wind turbines. However, this also holds true for power plants which i) first use chemical energy e.g. from burning fossil fuel or from nuclear energy in order to generate thermal energy, and which ii) second convert the generated thermal energy into mechanical energy by means of appropriate thermodynamic processes.

The efficiency of an electric generator is probably the most important factor for optimizing the production of electric energy. For a permanent magnet electric generator, it is essential that the magnetic flux produced by the permanent magnets is strong (i.e. there is a high level/magnitude of magnetic flux density). Presently, this can probably best be achieved with sintered rare earth magnets, e.g. using a NdFeB material composition. However, also the spatial magnetic field distribution produced by permanent magnets has an impact on the generator efficiency.

In permanent magnet generators, the permanent magnets are normally surface mounted on the rotor, while there is an airgap between said rotor and the stator. Hereby, the magnetic field flux density in the airgap is limited by the magnetic flux density of the permanent magnets, which is determined by their working point in the magnetic circuit (area of magnet = area of the airgap into which the magnet is acting), and in turn is limited by the properties of the magnetic material, i.e. its remanence and coercivity. The performance of a permanent magnet generator may be improved, when the magnetic field flux density in the airgap would be increased.

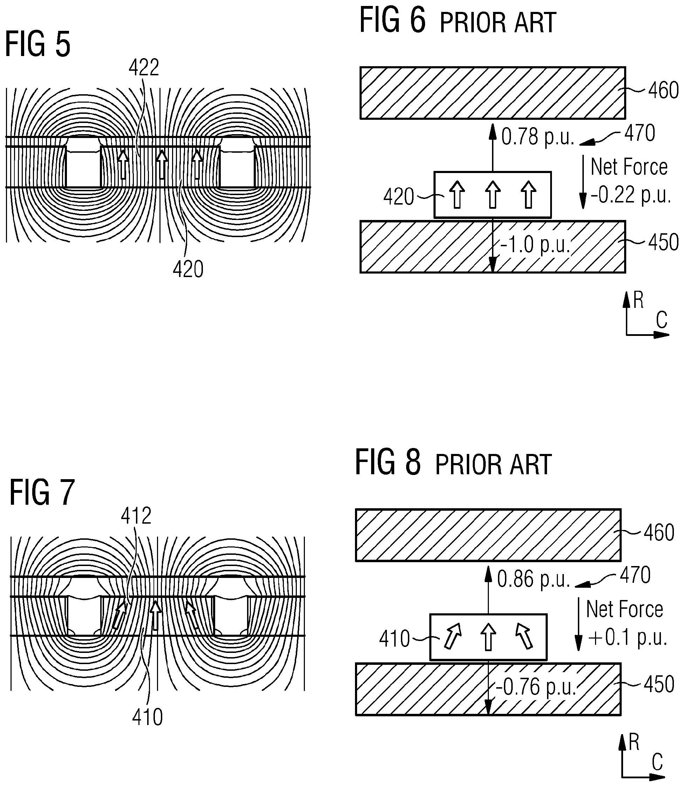

**Figures 5 and 6** show a first example of the prior art, wherein permanent magnets 420 are mounted on a rotor support structure 450. Said permanent magnets 420 are configured so that the magnetic flux is parallel, i.e. the magnet has an angular (parallel) distribution of magnetization directions that results in a parallel magnetization. Several of these magnets 420 are distributed side-by-side (with gaps in between) on top of the rotor support structure 450. Between the top surface of the magnet 420 and a stator arrangement 460, there is the airgap 470 present.

The net force acting on the parallel magnetic flux magnet 420 is shown, taken as the resultant of forces on the upper and lower surfaces of the magnet acting towards the stator 460 and the rotor 450, respectively. In the example shown, the net force is -0.22 p.u. towards the rotor 450. Thus, it should be noticed that the radial force (into the radial direction R) towards the rotor 450 is stronger than the radial force towards the stator 460.

**Figures 7 and 8** show a second example from the prior art, wherein focused magnetic flux magnets 410 instead of parallel magnetic flux magnets 420 are applied. The arrangement of stator and rotor is in principle the same as described for Figures 5 and 6 above. However, the focused magnetic flux magnet 410 is configured to have a first angular distribution 412 of magnetization directions resulting in a focused magnetization(i.e. a focused distribution of the magnetic field inside the magnets). A focused magnetic flux magnet may for example be provided as follows: i) magnetic powder is aligned during pressing in order to form a sintered anisotropic magnet, or ii) magnetic powder is magnetized with this pattern to form an isotropic magnet.

By using focused magnetic flux magnets, the airgap magnetic flux density can be increased, and hence the performance of the generator (specifically in terms of torque and efficiency) can be improved (without increasing the magnet volume).

However, the different magnetic flux density results in a radial force that acts towards the stator 460, which radial force is stronger than the force that acts towards the rotor 450 (net force of +0.1 p.u., i.e. towards the stator 460). This circumstance is problematic, since the focused flux magnet 410 is always drawn towards the stator 460 and away from the rotor support structure 450, whereon it is mounted.

With the described imbalance of magnetic flux between the top and bottom surfaces of focused magnetic flux magnets (i.e. the surface facing the airgap versus the surface in contact with the rotor), a net force towards the airgap is produced. This in turn means that the magnet assembly can move (for example in its rotor slot, from the rotor surface towards the stator, or the magnet assembly may start to load any containment system or adhesive that holds the magnet in position) during certain operating conditions. Thereby, disadvantages such as mechanical failure due to instantaneous forces and fatigue over time will occur.

Said issue, which occurs when using focused magnetic flux magnets in large power applications, arises from the imbalance in magnetic flux density between the top and bottom surfaces of the focused magnetic flux magnet. For large power applications, permanent magnets are often inserted as part of a magnet module or magnet assembly into the rotor structure by sliding the magnet assembly down a channel in the rotor. Hereby, the rotor has corresponding engagement elements to hold the magnet assembly in place, in particular against radial and circumferential forces. Tolerances in dimensioning these magnet assemblies and the corresponding channels leads to small radial and circumferential gaps between the magnet assembly and the rotor support structure.

Due to these disadvantages, generally parallel magnetic flux magnets (see Figures 5 and 6 above) are applied in large power applications, since there is always a larger net radial force towards the rotor (e.g. -0.22 p.u.).

So far, focused magnetic flux magnets have not been implemented in large power applications such as wind turbine generators, in particular direct-drive wind turbines. An approach to overcome the issues of the focused magnetic flux magnet (as outlined above) may be seen in different magnet fixation concepts (e.g. glue). However, this leads to disadvantages in terms of manufacturability, repairability, and performance.

There may be a need for providing a magnet assembly which enables an efficient and robust operation, when being used for rotor arrangement of a permanent magnet electromechanical transducer.

### Summary of the Invention

This need may be met by the subject matter according to the independent claims. Advantageous embodiments of the present invention are described by the dependent claims.

According to a first aspect of the invention there is provided a magnet assembly comprising: i) a focused magnetic flux portion (may be configured as a focused magnetic flux section and/or a focused magnetic flux device) having a first angular distribution of magnetization (alignment)directions resulting in a focused magnetization (towards one focal point), and ii) a parallel magnetic flux portion (may be configured as a parallel magnetic flux section and/or a parallel magnetic flux device) having a second angular distribution of magnetization (alignment) directions resulting in a (essentially) parallel magnetization (not towards one focal point).

According to a further aspect of the invention there is provided a rotor arrangement for an electromechanical transducer, in particular for a generator of a wind turbine. The provided rotor arrangement comprises i) a rotor support structure, and ii) at least one magnet assembly as described above. The magnet assembly is mounted to the rotor support structure.

According to a further aspect of the invention there is provided an electromechanical transducer, in particular a generator of a wind turbine. The provided electromechanical transducer comprises i) a stator arrangement, and ii) a rotor arrangement as described above.

According to a further aspect of the invention there is provided a wind turbine for generating electrical power. The provided wind turbine comprises i) a tower, ii) a wind rotor (or nacelle), which is arranged at a top portion of the tower and which comprises at least one blade, and iii) an electromechanical transducer as described above. The electromechanical transducer is mechanically coupled with the wind rotor.

According to an exemplary embodiment, the invention is based on the idea that a magnet assembly, which enables an efficient and robust operation (when being used for a rotor arrangement of a permanent magnet electromechanical transducer) may be provided, when a focused magnetic flux portion and a parallel magnetic flux portion are combined into one and the same magnet assembly (which is mounted on a rotor support structure of said electromechanical transducer).

While conventionally (see Figure 5 to 8 above), either a focused magnetic flux magnet or a parallel magnetic flux magnet (each having its particular advantages and disadvantages) has been applied, it has been found by the inventors, that the incorporation of both portions into a common magnet assembly yields an especially efficient and robust magnet assembly. Specifically, the described magnet assembly combines the advantages of the focused magnetic flux portion regarding performance (in particular the magnetic field flux density in the airgap) with the advantages of the parallel magnetic flux portion regarding mechanical stability (robustness) (in particular the strong radial force towards the rotor). Former disadvantages with respect to manufacturability, repairability, and performance, may be overcome by the described magnet assembly.

By splitting a magnet assembly (preferably in radial direction with respect to the rotor) into two or more portions and hereby utilizing a mixture of one or more parallel magnetic flux portion(s) (parallel magnetized magnet) and one or more focused magnetic flux portion(s) (flux-focused magnet), the net force, which acts on the magnet assembly, can be optimized to act towards the rotor again. In this manner, the existing magnet assembly retention technique is employed (due to the parallel magnetic flux portion), while benefitting from the performance advantage of the focused magnetic flux portion regarding the airgap. Therefore, it may be ensured that the force between the magnet assembly and the rotor (support structure) acts in the correct direction (towards the rotor), while the magnetic field flux density in the airgap is increased.

In summary, the advantageous (with respect to efficiency and performance) application of focused magnetic flux portions in large electrical machines may be realized, while improving the mechanical performance using a parallel magnetic flux portion at the same time.

As a consequence, the efficiency of the corresponding electromechanical transducer, in particular a wind turbine, can be improved.

According to an embodiment, the focused magnetic flux portion is arranged on top of the parallel magnetic flux portion (in the radial direction). According to a further embodiment, the parallel magnetic flux portion is arranged on top of the focused magnetic flux portion (in the radial direction). In this manner, the advantages of both magnetic portions can be efficiently combined, while the disadvantages can be compensated.

In a preferred embodiment, the parallel magnetic flux portion is arranged on top of the rotor support structure, in order to provide a net force that acts directly towards the rotor. Further, the focused magnetic flux portion is arranged on top of the parallel magnetic flux portion and at the airgap, in order to directly improve the magnetic flux density towards said airgap.

According to a further embodiment, the magnet assembly further comprises: a further focused magnetic flux portion arranged on top of the parallel magnetic flux portion (in the radial direction). Alternatively or additionally, a further parallel magnetic flux portion arranged on top of the focused magnetic flux portion (in the radial direction). This may provide the advantage that multi-portion (multi-layer) structures can be provided in a flexible manner.

It is mentioned that the number of magnet portions of the magnet assembly is not limited to three. In principle, the magnet assembly may comprise any higher number of magnet portions. Even though mainly alternating arrangements of focused magnetic flux portions and parallel magnetic flux portions are described, also two or more magnet portions of the same kind may be arranged directly on top of each other.

According to a further embodiment, the focused magnetic flux portion and the further focused magnetic flux portion sandwich the parallel magnetic flux portion. According to a further embodiment, the parallel magnetic flux portion and the further parallel magnetic flux portion sandwich the focused magnetic flux portion. This may also provide the advantage that multi-portion (multi-layer) structures can be provided in a flexible manner, depending on the present circumstances. Arranging specific magnet portion combinations yields different magnetic field(s) (densities) that can be applied individually to the desired functionalities.

According to a further exemplary embodiment, a sandwiched arrangement could exist with multiple layers of parallel and/or focused magnetic flux portions at various (flux focus) heights.

According to a further embodiment, at least one of the focused magnetic flux portions and the parallel magnetic flux portions is configured as a layer structure. This may provide the advantage that the portions can be stacked efficiently, while the layers can be arranged (at least partially) circumferentially around the rotor support structure.

According to a further embodiment, the thickness and/or the width and/or shape of the focused magnetic flux portion is different from the thickness and/or width and/or shape of the parallel magnetic flux portion. In particular, one thickness/width/shape is larger or smaller or different than the others.

Varying the thickness and/or width and/or shape (in particular the thickness and/or width ratio between a plurality of magnet portions of the magnet assembly) gives the designer of the described magnet assembly a further degree of freedom for realizing a desired magnetic flux density profile (within in the air gap between the rotor arrangement and the stator arrangement) .

According to a further embodiment, the focused magnetic flux portion and/or the parallel magnetic flux portion is formed by at least two magnet pieces being attached to each other. This may provide the advantage that the (focusing) magnet portions can be realized by composing or assembling smaller magnet pieces. Although assembling the different magnet pieces may require some additional effort this additional effort will, in most cases, be overcompensated because only smaller magnet pieces have to be produced. This holds true because in order to realize a focused magnetic flux portion it is often easier to manufacture two or more small focusing magnet pieces than to manufacture one larger focusing magnet piece.

It is mentioned that of course at least one of the magnet portions can be realized with a single magnet piece. Even further, also two (or more) magnet portions of the described magnet assembly can be realized as a single piece. In the context of this document, the term "single piece" may particularly mean that the respective magnet portion is integrally or monolithically formed by means of a single bulk magnetic material.

According to a further embodiment, the focused magnetic flux portion and/or the parallel magnetic flux portion comprises a sintered magnet, in particular a sintered magnet comprising NdFeB.

Using a sintered magnet material, in particular with a rare earth material composition, may provide the advantage that a strong magnetic flux density in particular within the various focal regions can be realized.

Further, when taking into account that typically sintered magnets are very rigid and/or brittle structures such that a further processing of the respective sintered magnet is not easy, the focused magnetic flux portion can be manufactured comparatively easy because smaller magnet portions/magnet pieces are involved. However, there may be no limitation of the magnet size that can be produced as flux focused magnets. This consideration, which has already been elucidated above, may hold true in particular for magnets comprising a typical NdFeB material composition.

By using at least two comparatively small sized sintered magnet portions or magnet pieces instead of a smaller number of larger sized sintered magnet portions or magnet pieces, the risk of mechanically damaging a magnet portion or magnet piece during a further processing may be significantly reduced. Such a further processing may include for instance a procedure of providing a protection layer at the outer surface of the magnet piece.

In order to avoid any misunderstanding with regard to the (internal) magnetization structure of the sintered magnet it is pointed out that an angular distribution of magnetization directions as described above is based on or is directly related with a preferred direction of grain orientations. This means that it is not necessary that all grains (contributing to a particular magnetic domain alignment direction or magnetization line) have to be oriented exactly in the same direction. It is rather only necessary that among a certain distribution of grain orientations there is (in average) a preferred grain orientation.

According to a further embodiment, the magnetization directions of the first angular distribution and/or the second angular distribution comprise straight lines.

Having focusing magnetization directions along straight lines may provide the advantage that the process of manufacturing the magnet portions, e.g. during a sintering procedure, may be facilitated. This holds true in particular in view of the matter of fact that an external magnetic field having a corresponding and necessary inhomogeneity can be generated comparatively easy with a proper spatial arrangement of external magnet coils.

It is pointed out that the magnetic focusing of the respective focused magnetic flux portion may not be perfect. Hence, the distribution of magnetization directions may result, at least in a cross-sectional view, in a focal volume having a certain spatial extension. In case of a perfect focusing the magnetic focal region may be, at least in a cross-sectional view, a magnetic focal point.

In this regard it is further mentioned that the described focusing may be i) a two dimensional (2D) focusing or ii) a three dimensional (3D) focusing.
i) In case of a 2D focusing the magnetization directions are distributed two-dimensionally. This means that all magnetization vectors are oriented within or parallel to a plane being defined by an x-axis and a z-axis. Thereby, the z-axis may be associated with a thickness direction of the magnet portion and the x-axis, which is perpendicular to this z-axis, may be associated with a width direction of respective magnet portion. In the "real 3D world" a theoretically perfect focusing would result in a focal line. In the field of optics, a 2D focusing is achieved e.g. by means of a cylindrical lens.
ii) In case of a 3D focusing the magnetization directions are distributed three-dimensionally. This means that there is not only a focusing along one direction (e.g. the above mentioned x-direction) but also along another direction being perpendicular thereto. Specifically, this another direction may be parallel to a y-axis which is perpendicular to both the x-axis and the above mentioned z-axis. The y-axis may define a depth direction of the respective magnetic portion. In the "real 3D world" a theoretically perfect 3D focusing would result in a focal point. In the field of optics a 3D focusing is achieved e.g. by means of a spherical lens.

According to an embodiment, the focused magnetic flux portion and the parallel flux portion directly abut. In this document the term "directly abut" may mean that there is no intended gap between the two magnet portions. This means that e.g. a small layer of adhesive and/or a surface protection or passivation layer in between the actual magnetic materials of the two magnet portions does not mean that the two magnet portions do not directly abut against each other.

According to an embodiment, at least one of the magnet portions of the magnet assembly is mounted to a common ferromagnetic (iron) back plate.

According to an exemplary embodiment, the number of magnetic portion layers in the radial direction can be optimized to balance the required retention force and the performance improvement.

According to a further exemplary embodiment, an additional advantage of using a focused magnetic flux portion (in particular in a thin layer structure configuration) may be an easier alignment procedure during manufacturing, by decreasing the distance between the poles of the alignment fixture. Thus, more control over the alignment field within the magnet may be obtained.

According to a further embodiment, the focused magnetic flux portion has a further first angular distribution of magnetization directions resulting in a further focused magnetization, wherein the first angular distribution and the further first angular distribution are different and/or wherein the focused magnetization and further focused magnetization are different. This may provide the advantage that multi-portion (multi-layer) structures can be provided in a flexible manner, depending on the present circumstances. Arranging specific focused magnetic flux magnet portions with different focused magnetizations yields different magnetic field(s) (densities) that can be applied individually to the desired functionalities.

According to a further embodiment of the rotor arrangement, the focused magnetic flux portion and/or the parallel magnetic flux portion is arranged (in particular directly arranged) on the rotor support structure.

According to a further embodiment, the magnet assemblies are not mounted directly to the rotor support structure. Instead, for each magnet assembly, there is provided a back plate made from a ferromagnetic material, e.g. iron. The back plate ensures a proper guidance of magnetic flux. This may significantly reduce in a beneficial manner the intensity of magnetic stray fields and may increase the magnetic flux in the region of the air gap.

According to a further embodiment, the focused magnetic flux portion and/or the parallel magnetic flux portion is configured as a circumferential layer that (at least partially) surrounds the rotor support structure. In one example, the circumferential layer consists of one piece. In another example, the circumferential layer comprises two or more pieces. Arranging specific magnet portion combinations yields different magnetic field(s) (densities) that can be applied individually to the desired functionalities.

According to a further exemplary embodiment, a multi-layer radial design can be combined with a multi-level circumferential design. This could e.g. further be extended to have a single circumferential piece for one layer, followed by the adjacent radial layer consisting of more than one circumferential piece. Different parallel and focused magnetic flux portions (with a range of flux focus heights) could be combined to provide a large variety of individual applications.

According to an embodiment, the wind turbine is a direct drive wind turbine. This may provide the advantage that the described technology can be directly implemented into a highly efficient wind turbine, thereby further improving the energy yield.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a wind turbine in accordance with an embodiment of the present invention.
- Figure 2: shows a rotor arrangement with a magnet assembly in accordance with an embodiment of the present invention.
- Figure 3: shows a rotor arrangement with a magnet assembly in accordance with a further embodiment of the present invention.
- Figure 4: shows a rotor arrangement with a magnet assembly in accordance with a further embodiment of the present invention.
- Figure 5: shows a parallel magnetic flux magnet from the prior art.
- Figure 6: shows a rotor arrangement with the parallel magnetic flux magnet from the prior art.
- Figure 7: shows a focused magnetic flux magnet from the prior art.
- Figure 8: shows a rotor arrangement with the focused magnetic flux magnet from the prior art.

### Detailed Description

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously all such spatially relative terms refer to the orientation shown in the figures only for ease of description and are not necessarily limiting as an apparatus according to an embodiment of the invention can assume orientations different than those illustrated in the figures when in use.

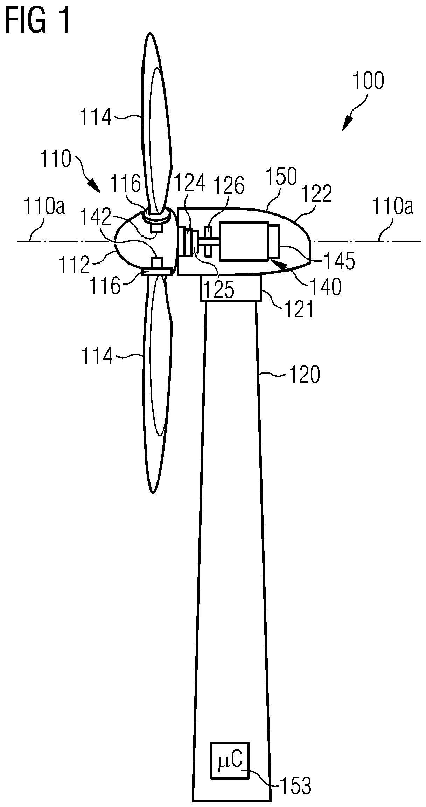

**Figure 1** shows a wind turbine 100 according to an embodiment of the invention. The wind turbine 100 comprises a tower 120 which is mounted on a non-depicted foundation. On top of the tower 120 there is arranged a nacelle 122. In between the tower 120 and the nacelle 122 there is provided a yaw angle adjustment portion 121 which is capable of rotating the nacelle 122 around a non-depicted vertical axis being aligned with the longitudinal extension of the tower 120. By controlling the yaw angle adjustment portion 121 in an appropriate manner it can be made sure that during a normal operation of the wind turbine 100 the nacelle 122 is always properly aligned with the current wind direction.

The wind turbine 100 further comprises a wind rotor 110 having three blades 114. In the perspective of Figure 1 only two blades 114 are visible. The rotor 110 is rotatable around a rotational axis 110a. The blades 114, which are mounted at a hub 112, extend radially with respect to the rotational axis 110a.

In between the hub 112 and a blade 114 there is respectively provided a blade angle adjustment portion 116 in order to adjust the blade pitch angle of each blade 114 by rotating the respective blade 114 around a non-depicted axis being aligned substantially parallel with the longitudinal extension of the respective blade 114. By controlling the blade angle adjustment portion 116 the blade pitch angle of the respective blade 114 can be adjusted in such a manner that at least when the wind is not too strong a maximum wind power can be retrieved from the available mechanical power of the wind driving the wind rotor 110.

As can be seen from Figure 1, within the nacelle 122 there is provided a gear box 124. The gear box 124 is used to convert the number of revolutions of the rotor 110 into a higher number of revolutions of a shaft 125, which is coupled in a known manner to an electromechanical transducer 140. The electromechanical transducer is a generator 140.

At this point it is pointed out that the gear box 124 is optional and that the generator 140 may also be directly coupled to the rotor 110 by the shaft 125 without changing the numbers of revolutions. In this case the wind turbine is a so called Direct Drive (DD) wind turbine.

Further, a brake 126 is provided in order to safely stop the operation of the wind turbine 100 or the rotor 110 for instance in case of emergency.

The wind turbine 100 further comprises a control system 153 for operating the wind turbine 100 in a highly efficient manner. Apart from controlling for instance the yaw angle adjustment device 121 the depicted control system 153 is also used for adjusting the blade pitch angle of the rotor blades 114 in an optimized manner.

In accordance with basic principles of electrical engineering the generator 140 comprises a stator arrangement 145 and a rotor arrangement 150. In the embodiment described here the generator 140 is realized in a so called "inner stator - outer rotor" configuration, wherein the rotor arrangement 150 surrounds the stator arrangement 145. This means that non-depicted permanent magnets, respectively magnet assemblies 200 of the rotor arrangement 150, travel around an arrangement of a plurality of non-depicted coils of the inner stator arrangement 145 which coils produce an induced current resulting from picking up a time varying magnetic flux from the traveling permanent magnets.

According to the embodiment described here, each magnet assembly 200 comprises a focused magnetic flux portion 210 and a parallel magnetic flux portion 220.

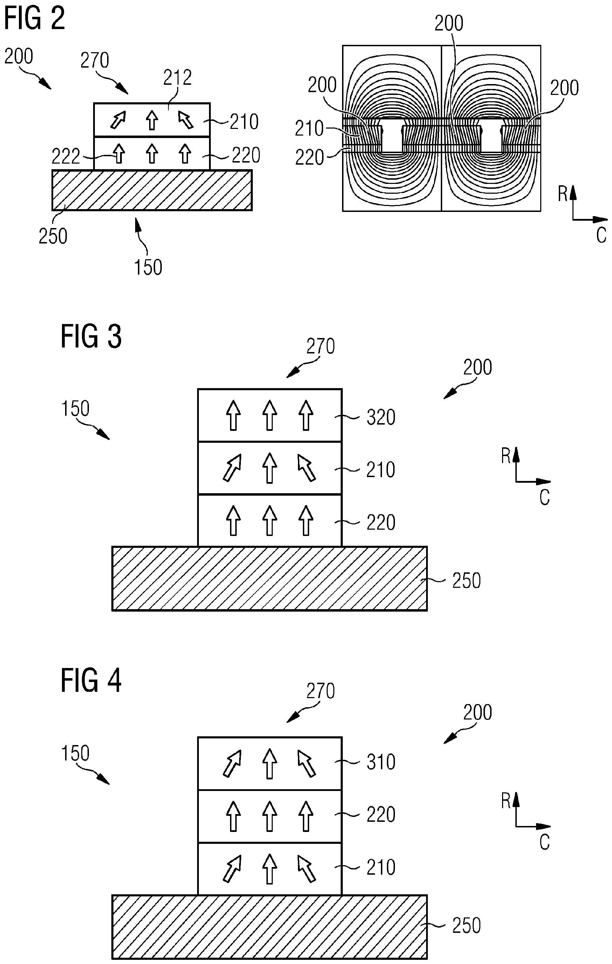

**Figure 2** shows a rotor arrangement 150 with a magnet assembly 200 according to an exemplary embodiment of the invention. The rotor arrangement 150 is separated from the stator arrangement (not shown) by an air gap 270 and comprises a rotor support structure 250 which provides the mechanical base for mounting the magnet assembly 200.

In contrast to prior art examples (see Figures 5 to 8 above), the mounted magnet assembly 200 does not comprise either parallel magnetic flux magnets or focused magnetic flux magnets, but instead both, a focused magnetic flux portion 210 and a parallel magnetic flux portion 220. The magnet portions 210, 220 are configured as layer structures that form a stack in the radial direction R of the rotor arrangement 150.

In the example shown, the parallel magnetic flux portion 220 is arranged on top of the rotor support structure 250, while the focused magnetic flux portion 210 is arranged on top of said parallel magnetic flux portion 220 in the radial direction R. The sizes (with respect to thickness and width) of the magnet portions 210, 220 are essentially equal in the example shown. However, other configurations with respect to size or the order of arrangement are possible as well. Above the focused magnetic flux portion 210, there is the air gap 270 that separates the rotor arrangement 150 from the stator arrangement (not shown).

Each one of the magnet portions 210, 220 comprises an angular distribution of magnetization directions, wherein each magnetization direction follows a straight line. Specifically, the focused magnetic flux portion 210 comprises a first angular distribution 212 of magnetization directions, which yields (outside of the magnet portion) a magnetic focal region.

It is mentioned that in other non-depicted embodiments the magnetization directions do not follow straight lines. Hence, for realizing a magnet assembly in accordance with the invention it is also possible to magnetize the magnet portions in a different manner unless the magnetization is such that a magnetic focusing effect is achieved.

The focused magnetic flux portion 210 is configured so that the magnetic flux is focused, i.e. the magnet has a first angular distribution 212 of magnetization directions that result in a focused magnetization.

The parallel magnetic flux portion 220 is configured so that the magnetic flux is parallel, i.e. the magnet has a second angular distribution 222 of magnetization directions that results in a parallel magnetization.

The right part of Figure 2 shows that several of the magnet assemblies 200 are distributed side-by-side (with gaps in between) on top of the rotor support structure 250 in the circumferential direction C. Hence, along a circumferential direction of the rotor arrangement 150, there are placed a plurality of said magnet assemblies 200.

The magnetic field produced by said magnet assemblies 200 is shown and demonstrates the advantageous effects of providing the combined parallel and focused magnetic flux.

**Figure 3** shows a rotor arrangement 150 with a magnet assembly 200 according to a further exemplary embodiment of the invention. In this example, the magnet assembly 150 is configured as a multilayer structure, wherein the parallel magnetic flux portion 220 and a further parallel magnetic flux portion 320 (being essentially equal to the parallel magnetic flux portion 220) sandwich a focused magnetic flux portion 210 in the radial direction R. Several of these magnet assemblies 200 can be arranged next to each other in the circumferential direction C of the rotor arrangement 150. Hereby, the multilayer structures may be different in the magnet assemblies 200.

**Figure 4** shows a rotor arrangement 150 with a magnet assembly 200 according to a further exemplary embodiment of the invention. In this example, the magnet assembly 150 is configured as a multilayer structure, wherein the focused magnetic flux portion 210 and a further focused magnetic flux portion 310 (being essentially equal to the focused magnetic flux portion 210) sandwich a parallel magnetic flux portion 220 in the radial direction R. Several of these magnet assemblies 200 can be arranged next to each other in the circumferential direction C. Hereby, the multilayer structures may be different in the magnet assemblies 200.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A magnet assembly (200) comprising:
a focused magnetic flux portion (210) having a first angular distribution (212) of magnetization directions resulting in a focused magnetization; and
a parallel magnetic flux portion (220) having a second angular distribution (222) of magnetization directions resulting in a parallel magnetization.

2. The magnet assembly (200) as set forth in claim 1, wherein the focused magnetic flux portion (210) is arranged on top of the parallel magnetic flux portion (220); or wherein the parallel magnetic flux portion (220) is arranged on top of the focused magnetic flux portion (210).

3. The magnet assembly (200) as set forth in claim 1 or 2, further comprising:
a further focused magnetic flux portion (310) arranged on top of the parallel magnetic flux portion (220); and/or
a further parallel magnetic flux portion (320) arranged on top of the focused magnetic flux portion (210).

4. The magnet assembly (200) as set forth in claim 3, wherein the focused magnetic flux portion (210) and the further focused magnetic flux portion (310) sandwich the parallel magnetic flux portion (220); or
wherein the parallel magnetic flux portion (220) and the further parallel magnetic flux portion (320) sandwich the focused magnetic flux portion (210).

5. The magnet assembly (200) as set forth in any one of the claims 1 to 4,
wherein at least one of the focused magnetic flux portion (210) and the parallel magnetic flux portion (220) is configured as a layer structure.

6. The magnet assembly (200) as set forth in any one of the claims 1 to 5,
wherein the thickness and/or the width and/or shape of the focused magnetic flux portion (210) is different, in particular larger or smaller, than the thickness and/or width of the parallel magnetic flux portion (220).

7. The magnet assembly (200) as set forth in any one of the claims 1 to 6,
wherein the focused magnetic flux portion (210) and/or the parallel magnetic flux portion (220) is formed by at least two magnet pieces being attached to each other.

8. The magnet assembly (200) as set forth in any one of the claims 1 to 7,
wherein the focused magnetic flux portion (210) and/or the parallel magnetic flux portion (220) comprises a sintered magnet, in particular a sintered magnet comprising NdFeB.

9. The magnet assembly (200) as set forth in any one of the claims 1 to 8,
wherein the magnetization directions of the first angular distribution (212) and/or the second angular distribution (222) comprise straight lines.

10. A rotor arrangement (150) for an electromechanical transducer (140), in particular for a generator (140) of a wind turbine (100), the rotor arrangement (150) comprising:
a rotor support structure (250), and
at least one magnet assembly (200) as set forth in any one of the claims 1 to 9, wherein the magnet assembly (200) is mounted to the rotor support structure (250).

11. The rotor arrangement (150) according to claim 10, wherein the focused magnetic flux portion (210) and/or the parallel magnetic flux portion (220) is arranged, in particular directly arranged, on the rotor support structure (250).

12. The rotor arrangement (150) according to claim 10 or 11, wherein the focused magnetic flux portion (210) and/or the parallel magnetic flux portion (220) is configured as a circumferential layer that surrounds the rotor support structure (250),
wherein the circumferential layer consists of one piece or wherein the circumferential layer comprises two or more pieces.

13. An electromechanical transducer (140), in particular a generator (140) of a wind turbine (100), the electromechanical transducer (140) comprising:
a stator arrangement (145), and
a rotor arrangement (150) as set forth in any one of the claims 10 to 12.

14. A wind turbine (100) for generating electrical power, the wind turbine (100) comprising:
a tower (120);
a wind rotor (110), which is arranged at a top portion of the tower (120) and which comprises at least one blade (114); and
an electromechanical transducer (140) as set forth in claim 13, wherein the electromechanical transducer (140) is mechanically coupled with the wind rotor (110).

15. The wind turbine (100) according to claim 14,
wherein the wind turbine (100) is a direct drive wind turbine.
